# FASCICULE DE BREVET EUROPEEN

(11) **EP 0 491 920 B1**
(45) Date de publication et mention de la délivrance du brevet: **24.04.1996**
(21) Numéro de dépôt: 91913027.8
(22) Date de dépôt: 10.07.1991
(51) Int. Cl.: G11B 5/31

(54) **PROCEDE DE REALISATION DE TETES D'ECRITURE ET/OU LECTURE POUR ENREGISTREMENT MAGNETIQUE**
VERFAHREN ZUR HERSTELLUNG VON AUFNAHME- UND/ODER WIEDERGABEKÖPFEN FÜR MAGNETISCHE AUFNAHME
METHOD FOR PRODUCING WRITE AND/OR READ HEADS FOR MAGNETIC RECORDING

(30) Priorité: 11.07.1990 FR 9008826
(43) Date de publication de la demande: 01.07.1992
(73) Titulaire: COMMISSARIAT A L'ENERGIE ATOMIQUE, F-75015 Paris (FR)
(72) Inventeur: GAUD, Pierre, F-38120 Saint-Egrève (FR); SIBUET, Henri, F-38120 Le Fontanil (FR); PERSICO, Alain, F-38400 Saint-Martin-d'Hères (FR); VIEUX ROCHAZ, Line, F-38360 Sassenage (FR)
(74) Mandataire: Signore, Robert
(86) Numéro de dépôt international: FR9100557
(87) Numéro de publication internationale: WO9202015

(56) Documents cités:
- EP-A- 0 032 230
- EP-A- 0 262 028
- EP-A- 0 452 193
- IBM TECHNICAL DISCLOSURE BULLETIN, vol. 21, no. 12, mai 1979, page 5002, Armonk, US, K.E. PETERSEN: "Thin Film Magnetic Heads", voir le document en entier
- PATENT ABSTRACTS OF JAPAN, vol. 11, no. 305 (P-623)(2752), 6 octobre 1987; & JP - A - 6297118
- PATENT ABSTRACTS OF JAPAN, vol. 14, no. 158 (P-1027)(4101), 27 mars 1990; & JP - A - 2014411
- PATENT ABSTRACTS OF JAPAN, vol. 13, no. 322 (P-902)(3670), 20 JUILLET 1989; & JP - A - 1088909

## Description

### Domaine technique

La présente invention a pour objet un procédé de fabrication de têtes magnétiques d'écriture et/ou de lecture. Elle trouve une application privilégiée dans la réalisation de têtes pour l'enregistrement vidéo grand public. Mais elle peut naturellement être utilisée dans d'autres domaines, comme celui des mémoires d'ordinateurs.

### Etat de la technique antérieure

Un support d'enregistrement magnétique pour matériel vidéo ou pour mémoire d'ordinateur comprend de nombreuses pistes sur lesquelles sont inscrites des informations sous formes de domaines magnétiques.

Pour augmenter la quantité d'informations enregistrées, on augmente non seulement le nombre d'informations par unité de longueur sur une piste mais encore le nombre de pistes. Pour cela, on diminue la largeur des pistes et on réduit l'interpiste jusqu'à rendre les pistes jointives.

Pour éviter le mélange des informations relatives à deux pistes jointives, les informations sont de préférence inscrites de manière inclinée sur chaque piste, l'inclinaison (ou "azimut") étant opposée d'une piste à la suivante. La tête d'écriture et de lecture doit présenter dans ce cas un entrefer (ou "gap" en terminologie anglo-saxonne) incliné lui aussi selon l'inclinaison de la piste à lire ou à écrire. On définit ainsi un "azimut" pour cet entrefer, comme étant l'angle entre le plan de l'entrefer et le plan transversal de la tête, lequel est le plan perpendiculaire à la direction générale du support d'enregistrement .

Les têtes à entrefer droit ou incliné pour enregistrement vidéo peuvent être obtenues mécaniquement par usinage droit ou oblique des pièces polaires. Un tel procédé est décrit notamment dans l'ouvrage intitulé "Recent Magnetics for Electronics", JARECT, vol. 10, Chapitre 11, p.121-133, 1983, édité par Y. SAKURAI, North-Holland.

Ce procédé de réalisation présente l'inconvénient de ne pas permettre l'obtention d'entrefers de largeur inférieure à 10 microns, ce qui limite sérieusement la densité d'informations pouvant être lues ou écrites.

On connaît cependant des procédés de réalisation de têtes magnétiques permettant d'obtenir des entrefers moins larges. Ces procédés utilisent des techniques de dépôt et gravure de couches minces. Un tel procédé est décrit par exemple dans le document EP-A-0 262 028.

Dans ces procédés, la pièce magnétique supérieure dans laquelle est formé l'entrefer, est nécessairement de faible épaisseur puisqu'il s'agit précisément d'une des couches minces réalisées. En général, cette épaisseur est inférieure à 5 microns. Si le support d'enregistrement vient frotter sur cette pièce, l'usure inévitable qui en résulte détruit très rapidement cette pièce.

Ces têtes ne sont donc utilisables en fait que dans les systèmes où la tête et le support d'enregistrement ne sont pas en contact l'un avec l'autre. Elles ne sont donc pas utilisables pour l'enregistrement vidéo.

On connaît cependant des procédés de réalisation de têtes en couches minces qui évitent cet inconvénient. Ces procédés utilisent encore des dépôts de couches mais la tête obtenue travaille sur la tranche, de sorte que l'usure affecte les couches non pas dans leur épaisseur mais dans leur plus grande dimension. Dans ce cas, le support d'enregistrement défile dans un plan non plus parallèle mais perpendiculaire au plan des couches. L'abrégé de brevet japonais vol. 13, n° 322 (P-902) (3670) du 20 juillet 1989 correspondant à la demande JP-A-1 088 909 décrit un tel procédé. Selon ce document, on part d'un substrat en verre, on dépose sur ce substrat une couche conductrice, par exemple en tungstène, on forme par électrodéposition une couche magnétique, par exemple en Fe-Ni, on grave une partie de cette couche magnétique pour former une contre-marche parallèle ou inclinée par rapport à la verticale du substrat, on dépose sur l'ensemble et par pulvérisation, une couche de matériau amagnétique comme SiO₂, on grave cette couche pour ne la laisser subsister que sur la contre-marche, on constitue une seconde couche magnétique en prenant la couche conductrice comme électrode et on planarise enfin l'ensemble. On obtient ainsi une pièce magnétique séparée par un entrefer correspondant à la couche en SiO₂. Un film de protection est déposé sur l'ensemble, par exemple en Al₂O₃. On perce un trou dans l'ensemble et on forme un bobinage à travers ce trou et autour des pièces polaires.

Bien que donnant satisfaction à certains égards, ce procédé présente encore des inconvénients. En effet, la définition de l'entrefer, dans sa forme, son épaisseur et, le cas échéant, son inclinaison, manque de précision. Cela est dû à ce que l'entrefer résulte d'une opération de gravure de la couche magnétique et de l'opération de pulvérisation, toutes opérations qui ne permettent pas d'obtenir la précision requise sur l'orientation de l'entrefer et sur son épaisseur qui doit être de l'ordre de 0,2 micron.

Le document EP-0 452 193 décrit une tête magnétique d'enregistrement et de lecture comprenant deux couches magnétiques séparées par une couche d'entrefer en matériau non magnétique et faisant un angle déterminé par rapport au plan des couches magnétiques. Le procédé de réalisation d'une telle tête utilise un substrat cristallin ayant des axes cristallographiques. Une attaque chimique s'effectue selon l'orientation cristallographique du substrat et crée un plan incliné sur lequel on dépose un matériau non magnétique. On dépose ensuite une première couche magnétique que l'on grave. On utilise alors un second substrat. On attaque ensuite le premier substrat pour pouvoir déposer, par dessous, une seconde couche magnétique. Ce document n'est compris dans l'état de la technique qu'en vertu des dispositions de l'article 54(1), (3) et (4) de la CBE, c'est-à-dire que pour les Etats désignés DE, GB et NL et uniquement pour l'appreciation de la nouveauté.

### Exposé de l'invention

La présente invention a justement pour but de remédier à ces inconvénients. A cette fin, elle propose un procédé conduisant à une extrême précision de définition de l'entrefer, tant dans son orientation (qu'elle soit droite ou inclinée) que dans son épaisseur et ceci tout en évitant les problèmes d'usure liés à l'enregistrement vidéo.

Ces résultats sont atteints, selon l'invention, par l'utilisation d'un substrat monocristallin dont on utilise les divers plans cristallographiques pour définir les bords de l'entrefer. Pour cela, on effectue une gravure anisotrope d'un tel substrat pour obtenir une surface dont l'orientation (droite ou inclinée) est parfaitement définie. Sur cette surface, on effectue une oxydation thermique du substrat pour former une couche amagnétique dont l'épaisseur peut être rigoureusement contrôlée à travers le processus d'oxydation. On obtient ainsi un entrefer parfaitement défini. Il ne reste plus alors qu'à former, de part et d'autre de cet entrefer, deux couches magnétiques qui vont encadrer l'entrefer et constituer le circuit magnétique.

De façon précise, l'invention a pour objet un procédé de réalisation de têtes d'écriture et/ou de lecture pour enregistrement magnétique dans lequel : on part d'un substrat, on dépose sur ce substrat des couches minces dont une couche magnétique, on forme un circuit magnétique avec un entrefer, on perce le centre du circuit magnétique par une ouverture dirigée perpendiculairement au plan de la couche, on bobine un fil conducteur autour du circuit magnétique en empruntant cette ouverture, la tête obtenue étant destinée à coopérer avec un support d'enregistrement magnétique disposé devant l'entrefer dans un plan perpendiculaire au plan des couches, ce procédé étant caractérisé par le fait que, pour obtenir le circuit magnétique avec son entrefer :
- on part d'un substrat monocristallin ayant des plans cristallographiques, ce substrat ayant une face avant et une face arrière orientées Selon un premier plan cristallographique,
- on effectue une gravure anisotrope de la face avant de ce substrat monocristallin pour obtenir une marche inférieure, une contre-marche, une marche supérieure, la contre-marche étant gravée selon un second plan cristallographique faisant un angle déterminé avec le premier plan cristallographique correspondant à la face avant du substrat,
- on effectue une oxydation thermique du substrat au moins sur la contre-marche, ce qui donne naissance à une paroi d'oxyde recouvrant cette contre-marche,
- on grave la marche supérieure, pour dégager au moins une partie de la paroi d'oxyde
- on forme de part et d'autre de cette paroi d'oxyde une couche magnétique,
- on grave cette couche magnétique pour lui donner la forme d'un circuit magnétique avec un entrefer constitué par ladite paroi d'oxyde.

On observera, par rapport à la technique antérieure décrite dans l'abrégé de brevet japonais cité plus haut, que ce n'est pas la couche magnétique qui est gravée pour définir l'entrefer, mais le substrat monocristallin, ce qui est beaucoup plus précis.

Le procédé de l'invention peut être mis en oeuvre selon plusieurs variantes, selon que l'entrefer est incliné ou droit (c'est-à-dire avec ou sans azimut). Lorsque l'entrefer est incliné, différentes variantes sont possibles selon que l'inclinaison recherchée est donnée immédiatement lors de la gravure anisotrope du substrat monocristallin ou obtenue en fin de procédé par une gravure anisotrope de la face arrière du substrat ce qui permet de monter la tête avec une certaine inclinaison.

De préférence, le substrat monocristallin utilisé est en silicium.

La présente invention prévoit également diverses dispositions permettant un traitement collectif des têtes, et notamment un procédé de perçage par exemple par laser.

### Brève description des dessins

De toute façon, les caractéristiques et avantages de l'invention apparaîtront mieux à la lumière de la description qui suit d'exemples de réalisation donnés à titre explicatif et nullement limitatif. Cette description se réfère à des dessins annexés sur lesquels :
- les figures 1a à 1c montrent divers plans cristallographiques du silicium ;
- les figures 2a à 2i représentent schématiquement une suite d'opérations selon une première variante de réalisation du procédé conforme à l'invention ;
- la figure 3 montre, en perspective, une tête obtenue selon le procédé de l'invention ;
- les figures 4a à 4d montrent différentes étapes de réalisation d'une tête à entrefer incliné avec gravure anisotrope de la face arrière du substrat ;
- les figures 5a à 5e montrent schématiquement une suite d'opérations selon une autre variante de réalisation avec gravure inclinée du substrat ;
- les figures 6a à 6g montrent schématiquement une suite d'opérations selon encore une autre variante ;
- la figure 7 montre, en vue de dessus, un montage pour le traitement collectif de têtes avec substrat et superstrat ;
- la figure 8 illustre, en coupe, le perçage d'un ensemble substrat-circuit magnétique-superstrat avec un laser.

### Exposé détaillé de modes de réalisation

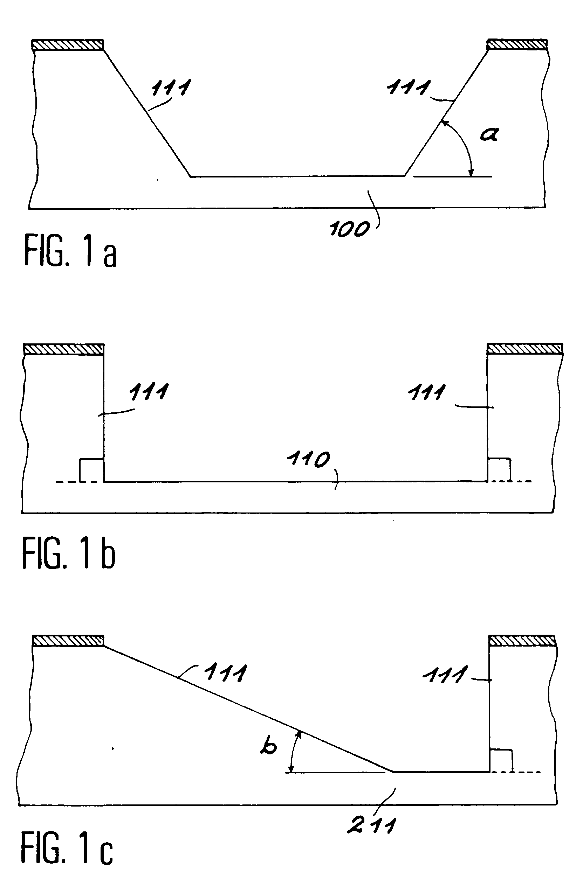

La figure 1a montre un substrat de silicium orienté 100, avec deux gravures anisotropes selon des plans cristallographiques 111. L'angle a de ces plans avec le plan du substrat est de 54,7° (soit 35,3° avec la verticale au substrat).

La figure 1b montre un substrat de silicium orienté ll0 avec deux gravures anisotropes selon des plans 111 perpendiculaires au plan du substrat. Enfin, la figure 1c montre un substrat de silicium orienté 211 et deux gravures anisotropes, l'une selon le plan 111 et l'autre selon le plan 111. Le premier plan fait un angle b de 19,5° avec le plan du substrat.

Bien d'autres orientations de plans cristallographiques et combinaisons de tels plans sont possibles et l'invention n'est nullement limitée à l'utilisation des plans illustrés. Si l'on désire obtenir une tête avec un entrefer incliné d'un angle compris entre 15 et 25°, on pourra utiliser par exemple le substrat orienté 211 de la figure 1c. Pour des têtes à entrefer droit, on pourra utiliser la disposition de la figure 1b avec un substrat orienté 110 et une gravure anisotrope selon les plans 111.

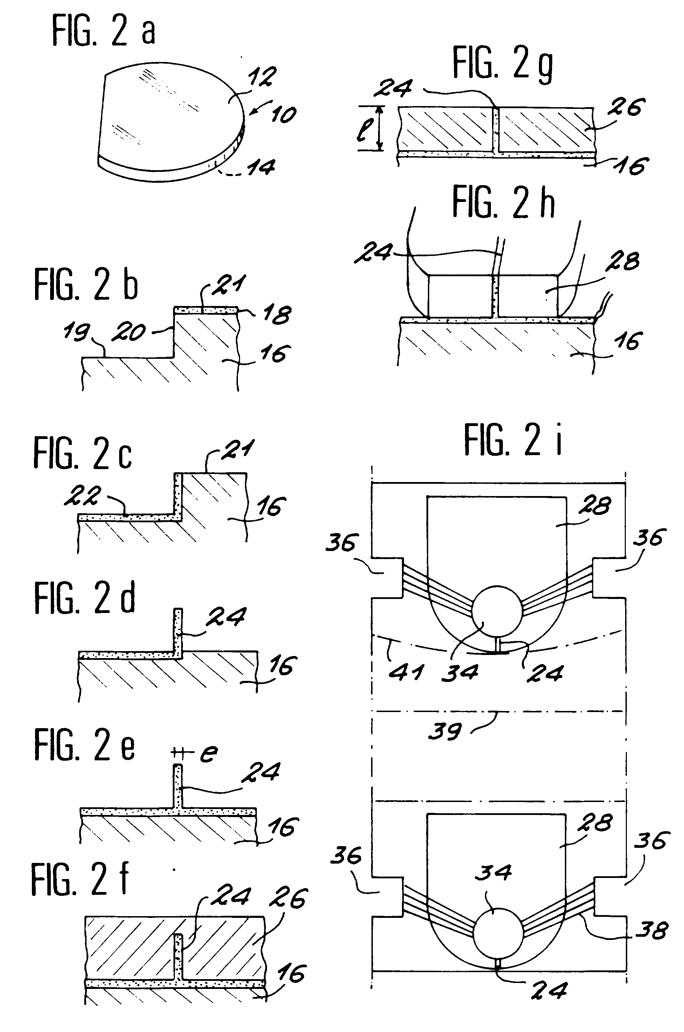

Les figures 2a à 2i décrivent diverses étapes d'un procédé de réalisation de têtes magnétiques conforme à l'invention.

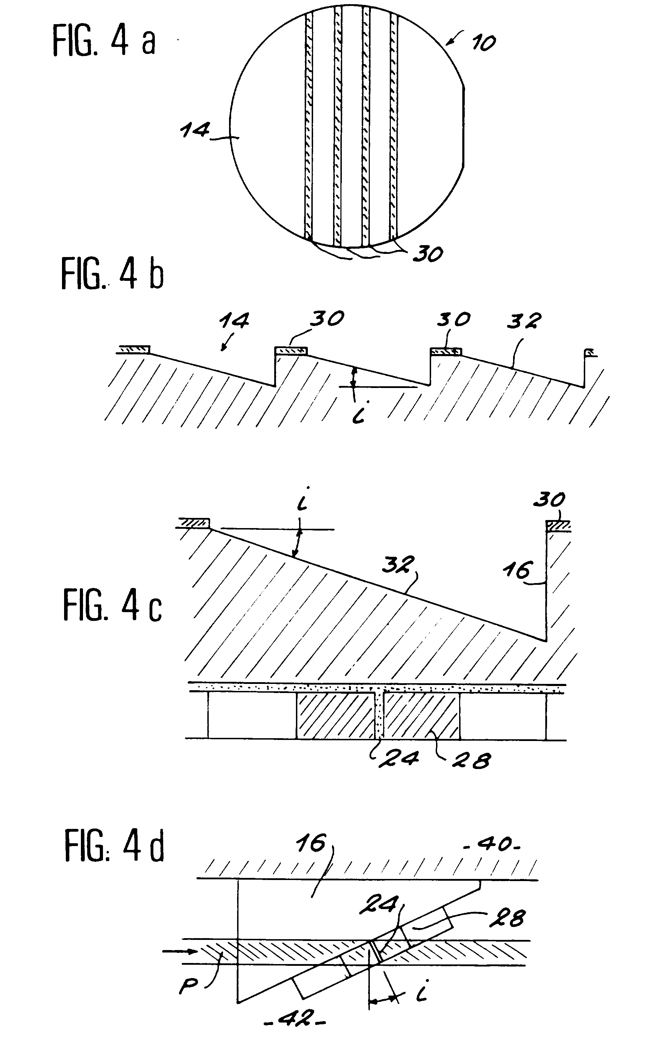

Sur la figure 2a tout d'abord, on voit une plaquette de silicium 10 avec une face avant 12 sur laquelle une pluralité de têtes vont être formées et une face arrière 14 qui peut être mise à profit pour incliner l'entrefer par rapport à la piste d'enregistrement, comme il sera expliqué à propos des figures 4a à 4d.

Dans la variante des figures 2a à 2i, le silicium qui va servir de substrat est supposé être orienté 112. Ce substrat est référencé 16 dans la suite des figures.

Sur ce substrat, on réalise d'abord un masque 18 par exemple en Si₃N₄ (figure 2b).

On effectue ensuite une gravure anisotrope de la partie du substrat 16 non masquée, de manière à obtenir une marche inférieure 19, une contre-marche verticale 20 et une marche supérieure 21. Cette gravure peut être effectuée par gravure chimique avec KOH.

Une oxydation thermique permet d'obtenir ensuite une couche de silice 22 (figure 2c) laquelle est amagnétique. Le masque 18 est retiré par gravure sèche ou humide.

L'opération suivante (figure 2d) consiste en une gravure isotrope de la marche supérieure 21 jusqu'au niveau de la marche inférieure de manière à obtenir une paroi verticale 24 en oxyde de silicium. Cette paroi 24 servira d'entrefer à la tête.

L'épaisseur e de la paroi 24 définira l'épaisseur de l'entrefer ; cette épaisseur est par exemple de l'ordre d'une fraction de micromètre (0,2 micron par exemple).

Afin d'avoir une surface de composition uniforme, on peut effectuer à nouveau une oxydation thermique du substrat (figure 2e).

On dépose ensuite (figure 2f) un matériau magnétique 26, par exemple un alliage Fe-Al-Si (Sendust). Ce dépôt peut être effectué par pulvérisation cathodique, par faisceau d'ions ou par dépôt électrochimique.

La couche magnétique 26 est aplanie de manière à ce que la paroi verticale 24 vienne affleurer à la surface du matériau magnétique 26 (figure 2g) et de manière à ce que la couche magnétique présente l'épaisseur l voulue. Cette épaisseur peut être égale par exemple à 4 microns.

L'opération suivante consiste à définir la géométrie du circuit magnétique 28 par gravure du matériau magnétique 26 (figure 2h).

De nombreux composants peuvent être réalisés en même temps sur la plaquette en silicium. La figure 2i représente schématiquement, une vue de dessus, la plaquette le long d'une barrette de l'ordre de 1 mm de large.

Les divers circuits magnétiques 28 ainsi que le substrat les supportant, sont ensuite percés d'une ouverture 34. Par ailleurs, on pratique une échancrure 36 de quelques dixièmes de millimètres de chaque côté de la barrette.

L'ouverture 34 et les échancrures 36 permettent de réaliser un bobinage 38 en fil conducteur (en cuivre par exemple). Ce bobinage peut être réalisé de façon manuelle.

Les composants ainsi constitués sont ensuite séparés les uns des autres par découpe. Sur la figure 2i, le trait 39 montre une ligne de découpe. La ligne 41 montre le profil de la surface de frottement définitive. Ce profil peut être obtenu par découpe laser comme il sera expliqué plus loin.

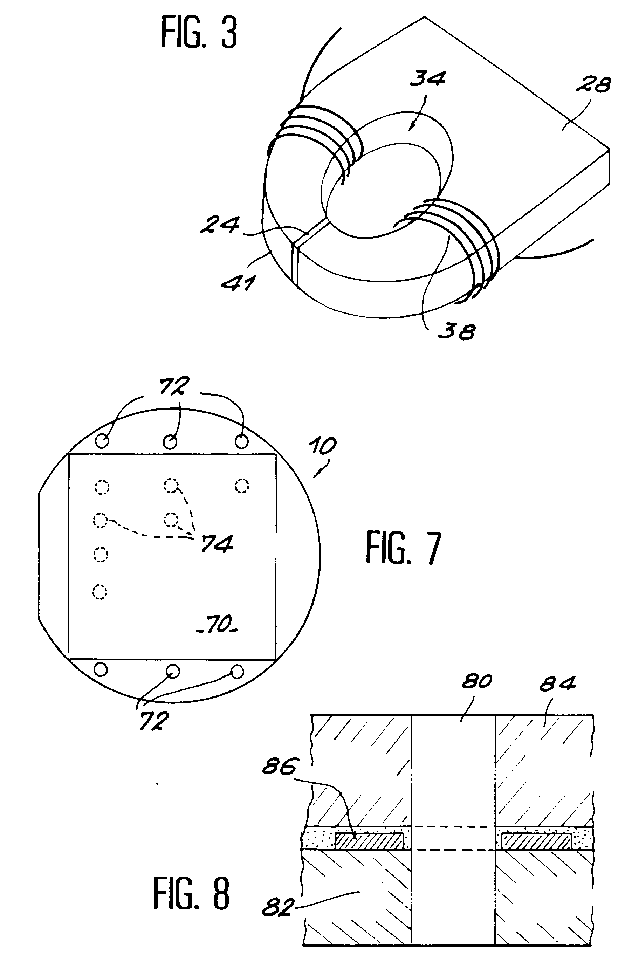

La figure 3 montre, en perspective, un circuit magnétique 28, avec son entrefer 24 et son bobinage 38 (le substrat n'est pas représenté).

L'entrefer peut avoir une épaisseur de 0,2µm, une hauteur de 5µm (correspondant à une piste de largeur 5µm) et une profondeur de 25µm. Le plan de frottement de la bande magnétique sur l'avant du circuit magnétique est référencé 41.

Si l'on veut obtenir un entrefer incliné et non plus droit, on peut poursuivre les opérations précédemment décrites, après l'étape de la figure 2h, par les opérations illustrées sur les figures 4a à 4d.

Sur la figure 4a, on voit la plaquette de silicium 10 retournée par rapport à la position de la figure 2a, c'est-à-dire montrant sa face arrière 14. Sur cette face arrière, on dépose un masque en silice le long de bandes 30. Dans les zones non masquées, on effectue une gravure anisotrope du silicium (par exemple par gravure chimique avec KOH) pour obtenir des faces 32 inclinées d'un angle i par rapport au plan de la plaquette (figure 4b). Ces faces correspondent au plan cristallographique 111.

Les barrettes finalement découpées comprennent une face arrière inclinée 32 et une face avant comprenant le circuit magnétique 28 et son entrefer 24. Chaque tête est alors fixée sur un support plan 40 (figure 4d) lui-même solidaire de l'appareil de lecture/écriture. La tête magnétique présente alors un entrefer 24 qui est incliné d'un angle i par rapport à la direction transversale de la piste d'enregistrement, laquelle est schématiquement représentée sur la figure 4d sous la référence P.

Dans toutes ces variantes, une couche superficielle, appelée encore superstrat, peut venir recouvrir l'ensemble pour obtenir une surface supérieure homogène. Ce superstrat peut être, comme le substrat, en silicium et être rapporté par collage.

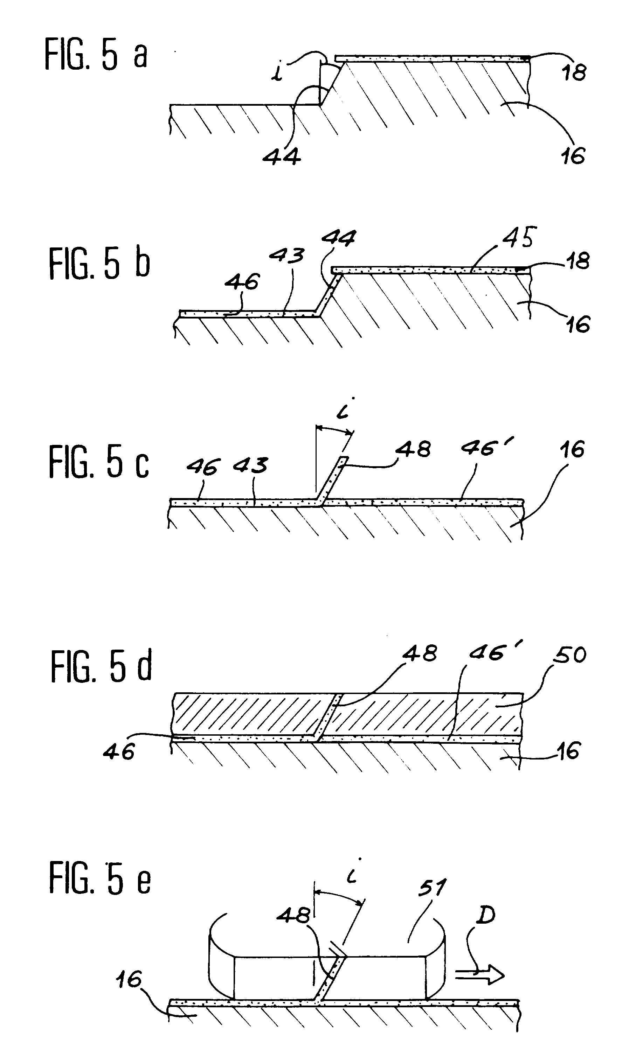

En référence aux figures 5a à 5e, il est décrit une autre variante du procédé de l'invention. L'inclinaison de l'entrefer y est obtenue directement par gravure anisotrope d'un plan incliné et non, comme dans la variante précédente, par inclinaison de la tête magnétique suivant la pente de la face arrière du substrat.

Sur la figure 5a, le substrat 16, qui peut être toujours en silicium, est orienté cette fois suivant le plan cristallographique 115. Il est gravé de manière anisotrope pour présenter une marche inférieure 43, une contre-marche 44 faisant un angle i (par exemple de 19,5°) avec le plan perpendiculaire à la surface du substrat 16 et une marche supérieure 45. Cette gravure anisotrope est effectuée à travers un masque 18, par exemple en Si₃N₄, qui permet de réserver la marche supérieure.

On procède ensuite à une oxydation thermique du silicium pour obtenir une couche 46 en SiO₂ sur toutes les surfaces non protégées par le masque 18, c'est-à-dire sur la marche inférieure 43 et sur la contre-marche 44 (figure 5b).

Le masque 18 est ensuite retiré et la marche haute 45 est gravée de manière isotrope pour être ramenée au niveau de la marche basse 43. On obtient ainsi une paroi 48 faisant l'angle i par rapport à la normale à la surface du substrat 16 (figure 5c).

On peut effectuer une nouvelle oxydation thermique du silicium de manière à obtenir une couche 46' de SiO₂ sur la partie gravée, de sorte que la silice couvre toute la surface du substrat.

L'opération suivante consiste à déposer une couche 50 de matériau magnétique, du Sendust par exemple, par pulvérisation cathodique, par faisceau d'ions ou par dépôt électrochimique. Cette couche magnétique est ensuite aplanie de manière à ce que la paroi 48 affleure à la surface de la couche magnétique 50 tout en obtenant l'épaisseur désirée pour cette couche 50, par exemple 4µm (figure 5d).

Par gravure, on définit ensuite le circuit magnétique 51 (figure Se). La paroi 48 en SiO₂ va jouer le rôle d'entrefer. La piste (non représentée) défilera devant cet entrefer (selon la flèche référencée D). L'entrefer présente une inclinaison (ou un azimut) de valeur i.

De même que précédemment, de nombreuses têtes magnétiques peuvent être réalisées simultanément sur une même plaquette de silicium. Des barrettes comprenant plusieurs têtes alignées sont percées et équipées de bobinages. Les têtes sont ensuite séparées les unes des autres par découpe.

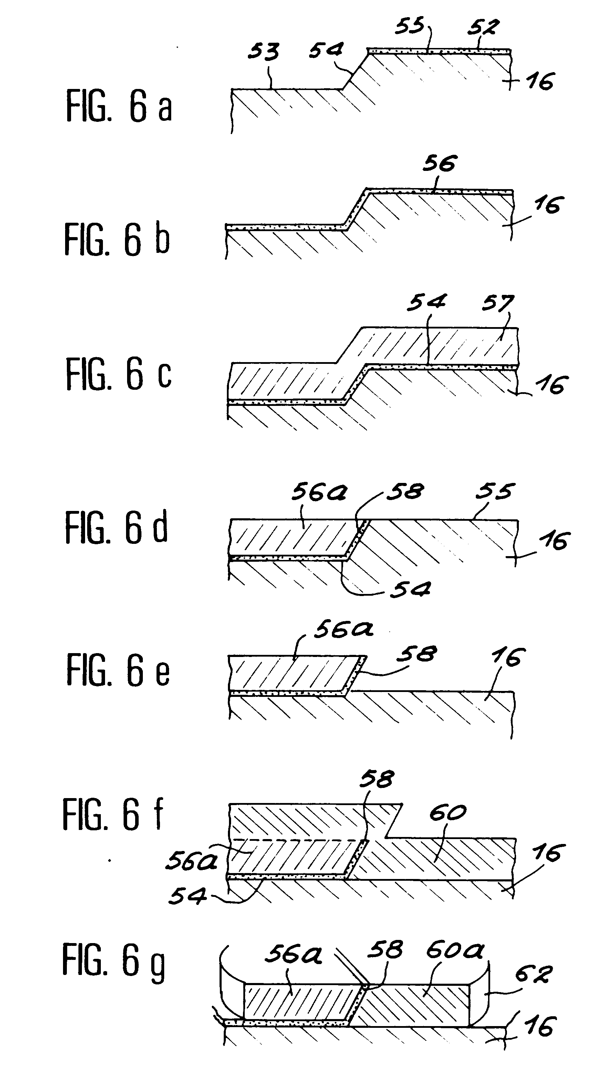

En référence aux figures 6a à 6f, une autre variante est décrite, toujours dans le cas où un azimut est obtenu directement sur l'entrefer.

Le substrat 16 de départ est en silicium orienté selon le plan 115. Un masque en résine 52 est déposé (figure 6a) et une gravure anisotrope est effectuée pour obtenir une marche inférieure 53, une contre-marche 54 et une marche supérieure 55. La contre-marche 54 est inclinée par rapport à la verticale et correspond à un plan cristallographique.

On retire le masque 52 et on procède à une oxydation thermique pour obtenir une couche 56 en silice sur l'ensemble (figure 6b).

On effectue ensuite un premier dépôt de matériau magnétique, par exemple en "Sendust", de manière à obtenir une couche 57 de matériau magnétique sur toute la surface (figure 6c).

On aplanit cette couche 57 de manière à dégager la paroi 58 en silice. Il reste une couche magnétique 56a.

La marche supérieure de silicium est ensuite gravée de manière isotrope jusqu'au niveau de la partie inférieure (figure 6e).

On effectue ensuite un second dépôt de matériau magnétique identique à celui du premier dépôt, pour former une couche 60 (figure 6f). La couche 60 est ensuite aplanie de manière à faire affleurer la couche de silice 58 et à obtenir l'épaisseur de matériau magnétique souhaitée. La paroi amagnétique 58 sépare alors une pièce polaire 56a provenant du premier dépôt et une pièce polaire 60a provenant du second dépôt (figure 6g).

L'épaisseur de matériau magnétique peut être contrôlée par la technique dite de "résistance carrée" qui permet, par une mesure de résistance entre quatre pointes sur toute la surface du dépôt, de retrouver l'épaisseur de la couche mince, moyennant la connaissance de sa résistivité.

Par gravure, on définit ensuite la géométrie du circuit magnétique 62. La suite des opérations (découpe, réalisation du bobinage, montage) est identique à ce qui a été décrit précédemment pour les deux premières variantes.

Dans les procédés qui viennent d'être décrits, il est préférable de protéger l'empilement obtenu en rapportant sur l'ensemble un superstrat. Ce moyen est déjà employé dans certains types de têtes que l'on trouve dans certains systèmes d'enregistrement vidéo. Dans cette application, le superstrat protège les pièces polaires vis-à-vis de l'usure occasionnée par le frottement de la bande sur la tête.

Le procédé qui vient d'être décrit présente cependant un avantage dans la mesure où le support de la tête est un substrat en silicium et où le silicium a la propriété de pouvoir être usiné par perçage laser. Il est donc intéressant, dans la mise en oeuvre de la présente invention, de rapporter un superstrat qui est également en silicium, de telle sorte qu'on pourra le traiter de la même manière. Comme il est prévu de percer un orifice pour le passage du bobinage, il est intéressant de percer l'ensemble substrat/superstrat.

Cette opération peut se faire soit sur des têtes unitaires, soit sur des barrettes comportant plusieurs têtes, soit encore sur la plaquette entière de silicium. Cette dernière possibilité permet de pousser le traitement collectif des têtes encore plus Loin. Ce traitement collectif peut, de plus, permettre la mise en forme finale de la tête, notamment pour lui donner la forme en arrondi (voir la figure 2i ou la figure 3 où cette surface de frottement est référencée 41) et réaliser les échancrures dans le cas de têtes vidéo par exemple (échancrures 36 de la figure 2i).

On ne connaît pas de procédé dans lequel un orifice (tel que 34 sur la figure 2i) soit percé à travers l'ensemble substrat/superstrat par laser. On ne connaît pas non plus de procédé dans lequel la forme finale est obtenue directement par découpe sur tranche. La raison en est que, la présence d'un superstrat entraîne une difficulté qui est celle de venir positionner le faisceau laser à l'emplacement où doit s'effectuer le perçage puisque le superstrat masque justement cet emplacement.

La présente invention propose un mode de repérage dans le cas où l'on rapporte le superstrat sur la plaquette entière de silicium. La figure 7 décrit le processus utilisé.

Sur une -plaquette de silicium 10, on vient rapporter, par collage ou soudure verre, un superstrat 70 également en silicium. Ce superstrat présente, par exemple, la forme d'un carré qui s'inscrit dans la circonférence de la plaquette. La taille inférieure du superstrat par rapport à la plaquette laisse apparaître des repères 72 sur les zones périphériques de la plaquette. Ces repères sont au moins au nombre de deux, soit dans le sens horizontal soit dans le sens vertical. Ils sont de préférence au même pas que les motifs à usiner qui, eux, sont masqués par le superstrat et portent la référence 74.

Les repères 72 permettent de savoir où sont disposés les motifs 74 et de positionner en conséquence le faisceau laser. On programme le déplacement de la plaquette sous le laser au pas de répétition des motifs. On commence la séquence de travail en positionnant le faisceau laser sur les repères. Le travail se poursuit automatiquement, sur la plaquette entière et le perçage s'effectue alors sur tous les composants 74.

Cette technique de masquage et de positionnement "peut être employée à la fois pour le perçage de l'orifice du bobinage et pour la mise en forme finale de la tête. Cette dernière opération peut se faire avec assitance par ordinateur.

Le laser utilisé peut être un Laser au néodyme émettant un rayonnement à la longueur d'onde de 1,06µm, ce qui convient bien au silicium.

La figure 8 schématise le perçage d'un orifice 80 dans l'ensemble substrat 82/superstrat 84. L'orifice 80 est percé automatiquement à l'intérieur du circuit magnétique 86, sans que ce circuit soit touché.

Une fois l'orifice percé et la découpe finale terminée, le bobinage est fait à la main en passant un fil conducteur dans l'orifice et dans les échancrures.

Il faut ajouter que grâce à l'utilisation d'un laser dont la taille du faisceau peut être aussi faible que 20µm, la découpe obtenue est propre. Il faut cependant effectuer un polissage final de l'arrondi de la tête sur un support abrasif pour faire apparaître les pièces polaires et l'entrefer.

Après toutes ces opérations, les têtes magnétiques obtenues sont prêtes à être montées sur l'appareil d'utilisation.

## Revendications

1. Procédé de réalisation de têtes d'écriture et/ou de lecture pour enregistrement magnétique dans lequel : on part d'un substrat, on dépose sur ce substrat des couches minces dont une couche magnétique, on forme un circuit magnétique avec un entrefer, on perce le centre du circuit magnétique par une ouverture dirigée perpendiculairement au plan de La couche, on bobine un fil conducteur autour du circuit magnétique en empruntant cette ouverture, la tête obtenue étant destinée à coopérer avec un support d'enregistrement magnétique disposé devant l'entrefer dans un plan perpendiculaire au plan des couches, ce procédé comprenant les opérations suivantes pour obtenir le circuit magnétique avec son entrefer :
- on part d'un substrat monocristallin (16) ayant des plans cristallographiques, ce substrat (16) ayant une face avant (12) et une face arrière (14) orientées selon un premier plan cristallographique,
- on effectue ensuite une gravure anisotrope de la face avant (12) de ce substrat monocristallin (16) pour obtenir une marche inférieure (19, 43, 53), une contre-marche (20, 44, 54), une marche supérieure (21, 45, 55), la contre-marche (20, 44, 54) étant gravée selon un second plan cristallographique faisant un angle déterminé avec le premier plan cristallographique correspondant à la face avant du substrat,
- on effectue ensuite une oxydation thermique du substrat au moins sur la contre-marche (20, 44, 54), ce qui donne naissance à une paroi d'oxyde (24, 48, 58) recouvrant cette contre-marche (20, 44, 54),
- on grave ensuite la marche supérieure (21, 45, 55), pour dégager au moins une partie de la paroi d'oxyde
- on forme de part et d'autre de cette paroi d'oxyde (24, 48, 58) une couche magnétique (26, 50), (56a, 60a),
- on grave enfin cette couche magnétique pour lui donner la forme d'un circuit magnétique (28, 51, 62) avec un entrefer constitué par ladite paroi d'oxyde (24, 48, 58).

2. Procédé selon la revendication 1, caractérisé par le fait que la gravure anisotrope du substrat monocristallin (16) est effectuée selon un second plan cristallographique perpendiculaire au premier, l'entrefer de la tête (24) étant alors perpendiculaire au plan du substrat (16).

3. Procédé selon la revendication 1, caractérisé par le fait que :
- la gravure anisotrope du substrat monocristallin (16) est effectuée selon un second plan cristallographique perpendiculaire au premier,
- on effectue une gravure anisotrope de la face arrière (14) du substrat (16) selon un plan cristallographique faisant un certain angle (i) par rapport à la face arrière,
- après réalisation de la tête, on fixe la tête sur un support (40) en plaquant la face gravée (32) du substrat sur le support (41), l'ensemble de la tête avec son entrefer se trouvant ainsi incliné dudit angle (i).

4. Procédé selon la revendication 1, caractérisé par le fait que la gravure anisotrope du substrat monocristallin (16) est effectué selon un second plan présentant un certain angle (i) par rapport à un plan perpendiculaire au premier, l'entrefer présentant alors une inclinaison (i) par rapport au plan perpendiculaire au substrat.

5. Procédé selon la revendication 1, caractérisé par le fait qu'il comprend les opérations successives suivantes :
- on dépose sur la face avant du substrat (16) un masque (18),
- on effectue la gravure anisotrope du substrat (16) à travers ce masque (18),
- on effectue l'oxydation thermique en présence dudit masque, ce qui conduit à une couche d'oxyde (22, 46) sur la contre-marche (20, 44) et sur la marche inférieure (19, 43),
- on enlève le masque (18),
- on effectue une gravure isotrope de la marche supérieure (21, 45) du substrat jusqu'au niveau de la marche inférieure (19, 43), ce qui laisse subsister une paroi d'oxyde (24, 48),
- on dépose sur l'ensemble une couche magnétique (26, 50), de part et d'autre de la paroi d'oxyde,
- on aplanit l'ensemble (26, 50) jusqu'à ce que la paroi d'oxyde (24, 48) affleure.

6. Procédé selon la revendication 1, caractérisé par le fait qu'il comprend les opérations successives suivantes :
- on dépose sur la face avant du substrat (16) un masque (52),
- on effectue la gravure anisotrope du substrat (16) à travers ce masque (52) pour obtenir une marche inférieure (53), une contre-marche (54) et une marche supérieure (55),
- on enlève le masque (52),
- on effectue une oxydation thermique de l'ensemble du substrat pour faire apparaître une couche d'oxyde (54) sur la marche inférieure (53), la contre-marche (54) et la marche supérieure (55),
- on dépose sur l'ensemble une première couche magnétique (56),
- on aplanit l'ensemble jusqu'à dégager la couche d'oxyde (58) déposée sur la contre-marche,
- on effectue une gravure isotrope de la marche supérieure (55) du substrat jusqu'à atteindre le niveau de la marche inférieure (53),
- on dépose sur l'ensemble une seconde couche magnétique (60),
- on aplanit l'ensemble jusqu'à dégager la couche d'oxyde (58) déposée sur la contre-marche (54).

7. Procédé selon la revendication 1, caractérisé par le fait qu'on dépose, sur le circuit magnétique de la tête, un superstrat (70) de protection de même composition que le substrat.

8. Procédé selon la revendication 7, caractérisé par le fait que l'opération de perçage affecte le superstrat (70), le centre du circuit magnétique (26, 50, 56a, 60a), le substrat (16) et par le fait que cette opération de perçage est effectuée par faisceau laser.

9. Procédé selon la revendication 8, caractérisé par le fait qu'on réalise une pluralité de têtes (74) sur une même plaquette (l0) servant de substrat, on recouvre d'un superstrat unique (70) la zone de la plaquette contenant les têtes (74), ce superstrat unique (70) laissant dégagées des zones périphériques de la plaquette, on forme dans ces zones dégagées des repères (72) permettant de situer les différentes têtes (74) situées sous le superstrat unique (70) et, en se servant desdits repères pour positionner le faisceau laser, on perce l'ensemble superstrat (70)-têtes (74)-substrat (16) par un faisceau laser positionné et déplacé d'une tête à l'autre.

10. Procédé selon l'une quelconque des revendications 1 à 9, caractérisé par le fait que le substrat est en silicium monocristallin.

## Patentansprüche

1. Verfahren zur Herstellung von Schreib- und/oder Leseköpfen für magnetische Aufnahme, bei dem : man von einem Substrat ausgeht, auf diesem Substrat Dunnschichten abscheidet, darunter eine Magnetschicht, man einen Magnetkreis mit einem Spalt bildet, man das Zentrum des Magnetkreises durchbohrt mit einer senkrecht zur Ebene der Schicht ausgerichteten Öffnung, man unter Benutzung dieser Öffnung einen leitenden Draht um den Magnetkreis herum aufspult, wobei der erhaltene Kopf dazu bestimmt ist, zusammenzuwirken mit einem magnetischen Aufnahmetrager, angeordnet vor dem Spalt in einer zur Ebene der Schichten senkrechten Ebene, und dieses Verfahren zur Herstellung des Magnetkreises mit seinem Spalt die folgenden Schritte umfaßt:
- man beginnt mit einem monokristallinen, kristallographische Ebenen aufweisenden Substrat (16), wobei dieses Substrat (16) eine Vorderseite (12) und eine Ruckseite (14) hat, ausgerichtet nach einer ersten kristallographischen Ebene,
- man führt anschließend eine anisotrope Ätzung der Vorderseite (12) dieses monokristallinen Substrats (16) durch, um eine untere Stufe (19, 43, 53), eine Stufensteigung bzw. -höhe (20, 44, 54) und eine obere Stufe (21, 45, 55) zu erhalten, wobei die Stufensteigung (20, 44, 54) entsprechend einer zweiten kristallographischen Ebene geatzt wird, die der Vorderseite des Substrats entspricht,
- man führt anschließend eine thermische oxidation des Substrats durch, wenigstens auf der Stufensteigung (20, 44, 54), was eine Oxidwand (24, 48, 58) erzeugt, die diese Stufensteigung (20, 44, 54) bedeckt,
- man ätzt anschließend die obere Stufe (21, 45, 55), um wenigstens einen Teil der Oxidwand freizulegen,
- man bildet beiderseits dieser Oxidwand (24, 48, 58) eine magnetische Schicht (26, 50), (56a, 60a),
- man ätzt anschließend diese magnetische Schicht, um ihr die Form eines Magnetkreises (28, 51, 62) zu geben, mit einem Spalt, der gebildet wird durch besagte Oxidwand (24, 48, 58).

2. Verfahren nach Anspruch 1, dadurch gekennzeichnet, daß die anisotrope Ätzung des monokristallinen Substrats (16) durchgeführt wird entsprechend einer zweiten kristallographischen Ebene, senkrecht zur ersten, wobei der Spalt (24) des Kopfes dann senkrecht ist zur Ebene des Substrats (16).

3. Verfahren nach Anspruch 1, dadurch gekennzeichnet, daß:
- die anisotrope Atzung des monokristallinen Substrats (16) ausgeführt wird entsprechend einer zweiten kristallographischen Ebene, senkrecht zur ersten,
- man eine anisotrope Atzung der Rückseite (14) des Substrats (16) entsprechend einer kristallographischen Ebene durchführt, die bezüglich der Rückseite einen bestimmten Winkel (i) bildet,
- man nach Herstellung des Kopfes den Kopf auf einem Träger (40) befestigt, indem man die geatzte Fläche (32) des Substrats auf den Träger preßt, wobei der gesamte Kopf mit seinem Spalt um besagten Winkel (i) geneigt ist.

4. Verfahren nach Anspruch 1, dadurch gekennzeichnet, daß die anisotrope Ätzung des monokristallinen Substrats (16) einer zweiten Ebene entsprechend durchgeführt wird, die bezüglich einer Ebene, die senkrecht zur ersten ist, einen bestimmten Winkel (i) aufweist, wobei der Spalt dann eine Neigung (i) bezüglich der zum Substrat senkrechten Ebene aufweist.

5. Verfahren nach Anspruch 1, dadurch gekennzeichnet, daß es die folgenden sukzessiven Schritte umfaßt:
- Aufbringen einer Maske (18) auf der Vorderseite des Substrats (16),
- Durchführen der anisotropen Atzung des Substrats (16) durch diese Maske (18),
- Durchführen der thermischen Oxidation bei Vorhandensein von besagter Maske, was zu einer Oxidschicht (22, 46) auf der Stufensteigung (20, 44) und auf der unteren Stufe (19, 43) führt,
- Entfernen der Maske (18),
- Durchführen einer isotropen Atzung der oberen Stufe (21, 45) des Substrats bis auf die Hohe der unteren Stufe (19, 43), was eine Oxidwand (24, 48) weiterbestehen läßt,
- Abscheiden einer magnetischen Schicht (26, 50) auf beiden Seiten der Oxidwand,
- Einebnen des Ganzen (26, 50) bis auf gleiche Hohe mit der Oxidwand (24,48).

6. Verfahren nach Anspruch 1, dadurch gekennzeichnet, daß es die folgenden sukzessiven Schritte umfaßt:
- Aufbringen einer Maske (52) auf der Vorderseite des Substrats (16),
- Durchführen der anisotropen Atzung des Substrats (16) durch diese Maske (52), um eine untere Stufe (53), eine Stufensteigung (54) und eine obere Stufe (55) zu erhalten,
- Entfernen der Maske (52),
- Durchführen einer thermischen Oxidation des gesamten Substrats um auf der unteren Stufe (53), der Stufensteigung (54) und der oberen Stufe (55) eine Oxidschicht (56) zu erzeugen,
- Abscheiden einer ersten magnetischen Schicht (57) auf dem Ganzen,
- Einebnen des Ganzen bis zur Freilegung der auf der Stufensteigung erzeugten Oxidschicht (58),
- Durchführen einer isotropen Atzung der oberen Stufe (55) des Substrats bis zum Erreichen des Niveaus der unteren Stufe (53)
- Abscheiden einer zweiten magnetischen Schicht (60) auf dem Ganzen,
- Einebnen des Ganzen bis zur Freilegung der auf der Stufensteigung (54) erzeugten Oxidschicht (58).

7. Verfahren nach Anspruch 1, dadurch gekennzeichnet, daß man auf dem Magnetkreis des Kopfes ein Schutz-Superstrat (70) mit der gleichen Zusammensetzung wie das Substrat aufbringt.

8. Verfahren nach Anspruch 7, dadurch gekennzeichnet, daß die Bohroperation das Superstrat 70, das Zentrum des Magnetkreises (26, 50, 56a, 60a) und das Substrat (16) betrifft, und dadurch, daß diese Bohroperation mittels Laserstrahls durchgeführt wird.

9. Verfahren nach Anspruch 8, dadurch gekennzeichnet, daß man auf ein und demselben als Substrat dienenden Wafer (10) eine Vielzahl von Köpfen (74) herstellt, man mit einem einzigen Superstrat (70) die Zone des Wafers uberdeckt, die die Köpfe (74) enthält, daß dieses einzige Superstrat (70) Randzonen des Wafers freiläßt und man in diesen freigelassenen Zonen Markierungen (72) bildet, die ermöglichen, die verschiedenen unter dem einzigen Superstrat (70) befindlichen Köpfe (74) ein- bzw. zuzuordnen und, indem man sich besagter Markierungen bedient, um den Laserstrahl zu positionieren, man die Einheit Superstrat (70)-Köpfe (74)-Substrat (16) mittels eines Laserstrahls durchbohrt, der positioniert und verschoben wird von einem Kopf zum andern.

10. Verfahren nach einem der Ansprüche 1 bis 9, dadurch gekennzeichnet, daß das Substrat ein monokristallines Silicium ist.

## Claims

1. Process for the production of read and/or write heads for magnetic recording, in which, starting with a substrate, on the latter is deposited thin coatings, including a magnetic coating, a magnetic circuit is formed with a gap, in the centre of the magnetic circuit is formed an opening directed perpendicular to the plane of the coating, a conductive wire is wound around the magnetic circuit taking the said opening, the head obtained serving to cooperate with a magnetic recording support placed in front of the gap in a plane perpendicular to the plane of the coatings, said process comprising the following operations for obtaining the magnetic circuit with its gap: use is made of a monocrystalline substrate (16) having crystallographic planes, said substrate (16) having a front face (12) and a rear face (14) oriented in accordance with a first crystallographic plane, the front face (12) of the monocrystalline substrate (16) then undergoes anisotropic etching to obtain a lower step (19), 43, 53), a riser (20, 44, 54), an upper step (21, 45, 55), the riser (20, 44, 54) being etched in accordance with a second crystallographic plane forming a given angle with the first crystallographic plane corresponding to the front face of the substrate,
at least the riser (20, 44, 54), of the substrate then undergoes thermal oxidation, which gives rise to an oxide wall (24, 48, 58) covering the said riser (20, 44, 54),
the upper step (21, 45, 55) is then etched to free at least part of the oxide wall, a magnetic coating (26, 50, 56a, 60a) is formed on either side of said oxide wall (24, 48, 58), said magnetic coating being etched to give it the shape of a magnetic circuit (28, 51, 62) with a gap constituted by said oxide wall (24, 48, 58).

2. Process according to claim 1, characterized in that the anisotropic etching of the monocrystalline substrate (16) is carried out in accordance with a second crystallographic plane perpendicular to the first, the gap of the head (24) then being perpendicular to the plane of the substrate (16).

3. Process according to claim 1, characterized in that: the anisotropic etching of the monocrystalline substrate (16) is carried out in accordance with a second crystallographic plane perpendicular to the first,
an anisotropic etching of the rear face (14) of the substrate (16) takes place in accordance with a crystallographic plane forming a certain angle (i) with respect to the rear face, following the production of the head, it is fixed to a support (40) by engaging the etched substrate face (32) on the support (41), the complete head with its gap then being inclined by said angle (i).

4. Process according to claim 1, characterized in that the anisotropic etching of the monocrystalline substrate (16) takes place in accordance with a second plane having a certain angle (i) relative to a plane perpendicular to the first, the gap then having an inclination (i) relative to the plane perpendicular to the substrate.

5. Process according to claim 1, characterized in that it comprises the following successive operations:
on the front face of the substrate (16) is deposited a mask (18), the anisotropic etching of the substrate (16) takes place through said mask (18),
thermal oxidation is carried out in the presence of said mask, which leads to an oxide coating (22, 46) on the riser (20, 44) and on the lower step (19, 43),
the mask (18) is removed,
isotropic etching of the upper substrate step (21, 45) takes place up to the level of the lower step (19, 43), which leaves an oxide wall (24, 48),
on the entity is deposited a magnetic coating (26, 50) on either side of the oxide wall,
the entity (26, 50) is smoothed until the oxide wall (24, 48) is flush.

6. Process according to claim 1, characterized in that it comprises the following successive operations:
a mask (52) is deposited on the front face of the substrate (16), the anisotropic etching of the substrate (16) takes place through said mask (52) in order to obtain a lower step (53), a riser (54) and an upper step (55),
the mask (52) is removed,
the substrate undergoes thermal oxidation in order to make an oxide coating (54) appear on the lower step (53), the riser (54) and the upper step (55),
a first magnetic coating (56) is deposited on the entity,
the entity is smoothed until the freeing of the oxide coating (58) deposited on the riser,
isotropic etching of the upper substrate step (55) takes place until the level of the lower step (53) is reached,
on the entity is deposited a second magnetic coating (60),
the entity is smoothed until the oxide coating (58) deposited on the riser (54) is freed.

7. Process according to claim 1, characterized in that, on the magnetic circuit of the head, is deposited a protective superstrate (70) having the same composition as the substrate.

8. Process according to claim 7, characterized in that the perforating operation affects the superstrate (70), the centre of the magnetic circuit (26, 50, 56a, 60a), the substrate (16) and in that said perforation operation is carried cut by a laser beam.

9. Process according to claim 8, characterized in that a plurality of heads (74) is formed on the same wafer (10) serving as the substrate, the zone of the wafer containing the heads (74) is covered by a single superstrate (70), said single superstrate (70) leaving free peripheral zones of the wafer, in said zones are formed marks (72) making it possible to locate the different heads (74) positioned below the single superstrate (70) and said marks are used for positioning the laser beam, the superstrate (70) - head (74) - substrate (16) assembly being perforated by a laser beam positioned and displaced from one head to the next.

10. Process according to any one of the claims 1 to 9, characterized in that the substrate is of monocrystalline silicon.
